# EUROPEAN PATENT APPLICATION

(11) **EP 2 190 231 A1**
(43) Date of publication of application: **26.05.2010**
(21) Application number: 08837169.5
(22) Date of filing: 26.09.2008
(51) Int. Cl.: H04W 8/20

(54) **A METHOD, SYSTEM AND APPARATUS FOR OBTAINING USER MANAGEMENT INFORMATION**

(30) Priority: 30.09.2007 CN 200710162759
(71) Applicant: Huawei Technologies Co., Ltd., Longgang District, Shenzhen Guangdong 518129 (CN)
(72) Inventor: YANG, Jian, Guangdong 518129 (CN); CHEN, Guoqiao, Guangdong 518129 (CN); WANG, Lei, Guangdong 518129 (CN); DONG, Ting, Guangdong 518129 (CN)
(74) Representative: Körber, Martin Hans
(86) International application number: PCT/CN2008/072554
(87) International publication number: WO 2009/046671

(57) **Abstract**

A method, system and device for obtaining user management information are disclosed. The method includes: receiving a message carrying user management information from a terminal; obtaining the user management information of the terminal from the message; and processing the user management information. The system includes: a server, adapted to: receive user management information from a terminal, and store the obtained user management information of the terminal; the terminal, adapted to send the user management information to the server. The present invention implements information interworking such as user management information statistics, interactive update and viewing rate statistics through interactions between the terminal and the server.

## Description

This application claims priority to Chinese Patent Application No. 200710162759.X, filed with the Chinese Patent Office on September 30, 2007 and entitled "Method, System, and Device for Obtaining User Management Information", which is incorporated herein by reference in its entirety.

### Field of the Invention

The present invention relates to the mobile communication field, and in particular, to a method, system and device for obtaining user management information.

### Background of the Invention

A mobile television (TV) service allows a user to watch TV through an intelligent mobile phone with an operating system and video functions. With high popularity and portability of mobile phones, the mobile TV service has broader influences than ordinary TV services.

Currently, the mobile TV service is implemented in the following three modes: The first is based on mobile networks, for example, the mobile TV service launched by China Mobile; the second is based on satellite broadcast, for example, the mobile TV service provided by operators in South Korea; the third is based on a digital TV receiving module installed in a mobile phone, which can receive digital TV signals directly.

Currently, the mobile TV service based on mobile networks is launched by China Mobile, depending on a general packet radio service (GPRS) mobile network. In fact, this mobile TV service is launched as a data service by using a streaming technology. However, a user needs to download and install a player in a mobile terminal (generally a personal digital assistant, PDA) with an operating system. Related TV program contents are provided by China Mobile and a content provider (Service Provider ,SP) through cooperation.

It is a new idea to implement the mobile TV service based on satellite networks. That is, a mobile phone is used to receive TV program signals broadcasted by satellites. Currently, digital multimedia broadcasting (DMB) receivers are launched in South Korea only. According to SK, the DMP receiver can provide high quality images, through which users can receive terrestrial radio TV broadcast signals and satellite TV broadcast signals at the same time.

However, in the mobile TV service in the prior art, the server cannot obtain the terminal status information or make content statistics.

The prior art has the following weaknesses: Although the terminal can obtain program contents sent from the server in broadcast mode, it is hard to manage a large amount of terminal information in broadcast mode. For example, the viewing rate statistics and the process of updating interactive documents for a TV program being watched are hard to manage. In addition, after a service guide (SG) is updated, updated contents cannot be sent to proper users immediately, and the server cannot obtain the user status (for example, online and watching) immediately.

### Summary of the Invention

Embodiments of the present invention provide a method, system and device for obtaining user management information to make statistics of user management information of a terminal.

A method for obtaining user management information in an embodiment of the present invention includes:
receiving a message carrying user management information from a terminal;
obtaining the user management information of the terminal from the message; and
processing the user management information.

A system for obtaining user management information in an embodiment of the present invention includes:
a server, adapted to receive user management information from a terminal, and store the obtained user management information of the terminal; and
the terminal, adapted to send the user management information to the server.

A server provided in an embodiment of the present invention is adapted to obtain user management information and includes:
a receiving module, adapted to receive user management information sent from a terminal; and
a statistics module, adapted to store the user management information of the terminal obtained by the receiving module.

A terminal provided in an embodiment of the present invention is adapted to send user management information to a server and includes:
a user management information generating module, adapted to generate user management information; and
a user management information sending module, adapted to send the generated user management information in the form of a message.

Compared with the prior art, embodiments of the present invention have the following merits:
Embodiments of the present invention implement information interworking such as user management information statistics, interactive update and viewing rate statistics through interactions between the terminal and the server.

### Brief Description of the Drawings

FIG. 1 is a flowchart of a method for obtaining user management information in a first embodiment of the present invention;
FIG. 2 is a flowchart of a method for obtaining user management information in a second embodiment of the present invention;
FIG. 3 is a flowchart of a method for obtaining user management information in a third embodiment of the present invention;
FIG. 4 is a flowchart of a method for obtaining user management information in a fourth embodiment of the present invention; and
FIG. 5 shows a structure of a system for obtaining user management information in a fifth embodiment of the present invention.

### Detailed Description of the Invention

The present invention is hereinafter described in detail with reference to the accompanying drawings and exemplary embodiments.

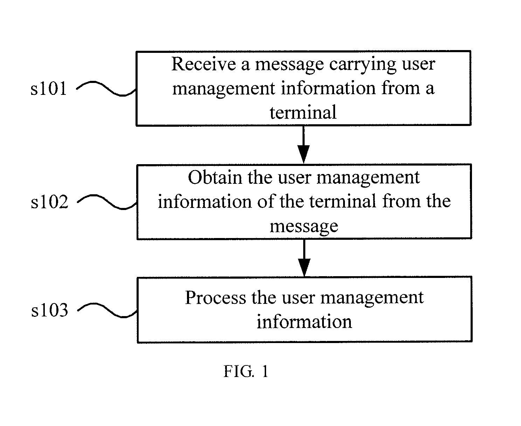

As shown in FIG. 1, a method for obtaining user management information in the first embodiment of the present invention includes the following steps:

### S101. Receive a message carrying user management information from a terminal.

### S102. Obtain the user management information of the terminal from the message.

### S103. Process the user management information.

Specifically, in the first embodiment of the present invention, interactive update, viewing rate statistics and other information interworking are implemented through interactions between the terminal and the server. Interactive messages between the terminal and the server may be specified to comply with a certain format and carry little necessary information. Such messages are easy to process by the server, thus lessening the burden of the server. The server may record and make statistics of the terminal information according to a certain policy. The server may also process the interactive information reported by the terminal according to the policy.

The method provided in this embodiment is as follows: When a user logs in to a channel, the terminal needs to store user management information such as service ID and user ID locally; after a program is received for a certain period of time, the terminal needs to send the user management information such as service ID, user ID and channel ID to the server; after the terminal logs out of the program, the terminal also needs to send the user management information such as service ID, channel ID and user ID to the server. Then, the logout ends. The purpose of login and logout is to provide the server with the user management information of the terminal, which can serve as the evidence for the server to make statistics of the viewing rate and define the watching behavior of the terminal.

After the user logs in to a channel, the terminal may send the user management information such as service ID and user ID to the server directly, without waiting for the channel program to be received for a certain period of time. In the preceding case, the user management information does not include channel information, that is, channel ID. After the terminal logs out of the program, the terminal may send the user management information such as service ID, channel ID and user ID to the server. Then, the logout ends.

After obtaining the user management information of the terminal, the server may also process the obtained user management information, and the process includes at least one of the following operations: recording user login status information; recording status information of a program that the user watches; and recording service information that the user needs to update, where:
the user login status information includes at least one of the following: terminal ID, user ID, service subscription relationship, login time, login mode and user key validity period; the status information of a program that the user watches includes at least one of the following: ID of the program that the user watches, ID of the channel that the user watches, time when the user begins to watch the channel and time when the user logs out of the channel; and the service information that the user needs to update includes at least one of the following: whether the user key needs to be updated, whether the interactive information of the user needs to be updated, and whether the SG of the user needs to be updated.

After obtaining the user management information of the terminal, the server may also obtain the channel program watching time according to the time when the message carried in the user management information is sent or the time when the server sends the first frame and last frame of a program to the terminal.

After obtaining the user management information of the terminal, the server may also obtain the viewing rate of a channel or program. The process of obtaining the viewing rate of a channel or program may include: setting an ID for a channel or program under statistics; receiving a message that the terminal sends when receiving or logging out of contents of the channel or program; and obtaining the viewing rate of the channel or program according to the message. The process of obtaining the viewing rate of a channel or program may also include:
sending a message about whether to watch a specified channel or program to all terminals or a specified terminal; receiving a response from a terminal watching the specified channel or program; and obtaining the viewing rate of the channel or program according to the response.

The second embodiment of the present invention provides a method for obtaining user management information by the server when a terminal logs in to a program channel and logs out of a played program. The user management information includes one or multiple of the following: message type ID, message sending time, terminal ID, service ID, program ID, online or offline status of the terminal, terminal identification code, user ID information and channel ID, where the message type ID includes a login message ID and a logout message ID. After subscribing to a channel, the terminal does not send any message to the server. The server knows nothing about the terminal status, user information and update details of the subscribed channel. Thus, a method must be provided to solve this problem. This solution provides a method for the server to further know how the terminal receives a program and performs interactions.

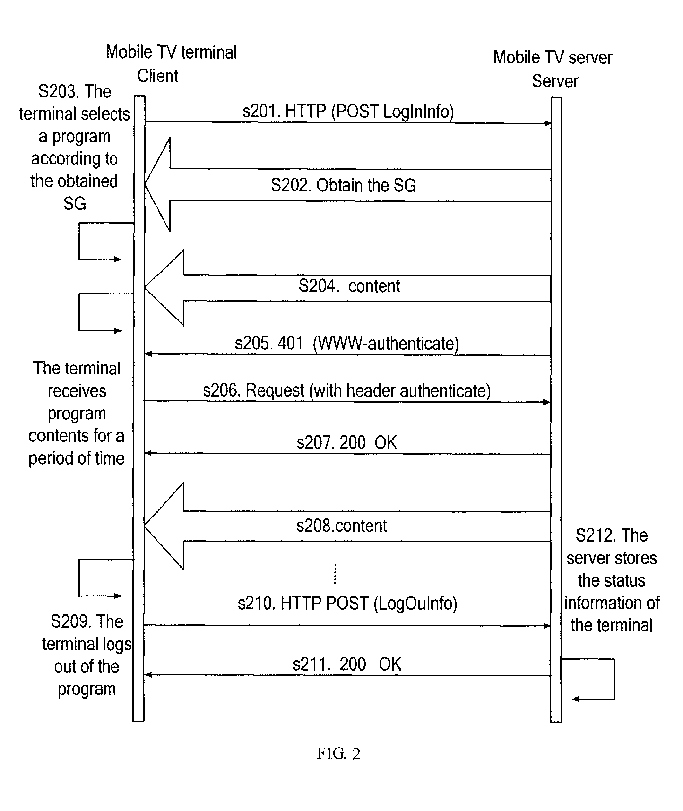

As shown in FIG. 2, the idea of this solution lies in that the terminal may log in to a channel that plays the program when a terminal user watches a program at a specific time. Upon login, the terminal may send the user management information such as service ID and user ID to the server. The user management information may be sent to the server in multiple modes. The server may store the user management information and respond to the received message. After the terminal logs out of a received program, the terminal interacts with the server as follows: The terminal sends the user management information in case of logout such as service ID, channel ID and user ID to the server. The server records the saved overall details of a program that the terminal logs in to according to the user management information.

As shown in FIG. 2, the process includes the following steps:
S201. The terminal is started, and sends a LogInInfo message to the server.

The following lists contents of the LogInInfo message:
POST/HTTP/1.1
Date:Sat,20Jul200720:31:22GMT
Accept-Ranges: bytes
Accept-Language: zh-cn
Content-Length: 1205
Content-Type:text/xml
Host:host: www.sample.com:8080
Connection: close
<CR>
<?xml version="1.0" encoding="UTF-8"?>
<!-- edited with XMLSPY v5 rel. 4 U (http://www.xmlspy.com) by Registred (Registred) -->
<LogReport xmlns:xsi="http://www.w3.org/2001/XMLSchema-instance"
xsi:noNamespaceSchemaLocation="C:\Documents and
Settings\Administrator\Desktop\Edit3.xsd">
<Message_Type Message_Type_Type="Loglnlnfo"/>
<User_ID User_ID_Type="abc"/>
<Service_ID Service_ID_Type="01"/>
<Program_ID Program_ID_Type="11"/>

In this embodiment, the LogInInfo message is added behind a Hyper Text Transfer Protocol (HTTP) POST header as a message body in an extensible markup language (XML) format, and is sent to the server. The message header is separated from the message body by a enter <CR> symbol. The upper part is the message header and the lower part is the message body. The message header describes a host and port to be requested. When the connection mode is "close", continuous connections are unnecessary. HTTP1.1 supports discontinuous connections.

The LogInInfo message includes a service ID, a user ID (for example, an international mobile subscriber identification number (IMSI) information), and other user management information. The LogInInfo message of the terminal may use a format, as shown in FIG. 2. The LogInInfo message is sent through an interactive channel. The LogInInfo message may be stored in an interactive server or a special server for recording statistics data. In this embodiment, the LogInInfo message is sent to the server in the HTML format.

The LogInInfo message may be sent through multiple methods, for example, the HTTP POST method. This is an example only. If other methods are available, the principle and idea are the same.

When the terminal is started, the terminal reports the LogInInfo message to the server. Meanwhile, the server sets the user status to be online. The terminal obtains the SG and other related data from the server. When related data in the server is updated, the server may notify the online user of updating data, and the notification may be pushed to the online terminal. In this case, the terminal may perceive the data changes in the server and retrieve the data immediately.

S202. The terminal obtains the SG.

The mobile TV terminal can receive a channel program only when the terminal is already registered in the server and is already activated to log in to a channel program.

S203. The terminal without subscribed channels subscribes to channels according to the obtained SG.

The determined subscription relationship describes the channels that the user subscribes to in the SG. It may be stored in the server in the form of a table to synchronize with the terminal.
A. The subscription mode may be external: For example, the subscription may be performed through network access or phone dial-up. The subscription result may be recorded in the server.
B. The subscription mode may also be internal: The subscription may be performed by the terminal in the SG. When the terminal subscribes to or unsubscribes from a channel, the subscription relationship table in the server may be changed, and synchronized with the terminal.
C. The server may synchronize the subscription relationship with the terminal. The server may synchronize the subscription relationship with the online user when the terminal is started or periodically according to a policy of the server. The subscription relationship may be maintained by the terminal or synchronized with the server. When the user performs subscription, the local subscription relationship may be sent to the server in HTTP POST mode to synchronize with the server.

After logging in to a channel, the user may receive an SG. The SG has a channel content forecast. The terminal may obtain a channel list through the SG, and receive program contents according to the channels in the channel list.

If the terminal receives program contents in broadcast mode, the terminal selects a desired channel according to the received SG. After the user terminal selects a channel ID in the SG, the terminal begins to receive programs.

S204. The server sends program contents to the terminal.

The server may send contents in broadcast mode or in streaming mode.

If the terminal does not log out after receiving the program contents for a certain period of time (may be set to 1 minute), the information will be sent to the server. The server may record the login time of the terminal.

After logging in to a channel, the terminal needs to record the current status information locally. The specified time may be preset by the network or CP. The time is used by the terminal to judge whether to send statistics information to the server. If the channel login time of the terminal exceeds the preset time, the user is watching a program; if the terminal logs out of the channel within the preset time, the user does not watch the channel program.

S205. The server authenticates the terminal.

The following lists contents of an authentication message:
HTTP/1.1 401 Unauthorized
Server: Microsoft-IIS/5.1
WWW-Authenticate: Digest
realm="testrealm@host.com",
qop="auth,auth-int",
nonce="dcd98b7102dd2f0e8b11d0f600bfb0c093",
opaque="5ccc069c403ebaf9f0171e9517f40e41"
<CR>

After receiving a POST message from the terminal, the server needs to authenticate the terminal by sending a challenge to the terminal. Sending a challenge is to give the client an HTTP response, the status code of which is 401 (Unauthorized) and which carries a message header WWW-Authenticate. The client knows that the uniform resource identifier (URI) needs to be authenticated when receiving the HTTP response.
domain: a Uniform Resource Identifier (URI) list, indicating domains to be protected. It may be a list, which tells the user that these URIs should be authenticated in the same way. If the domain field is null or ignored, all the URIs in the server need to be authenticated.
nonce: a random character string, which varies each time. The nonce field is related to the algorithm. The algorithm is similar to Base64 encryption: time-stamp H(time-stamp ":"ETag ":" private-key), where time-stamp is a server clock and ETag is a requested Etag header.
opaque: generated by the server and returned along with a request sent by the client. The opaque field is a Base64 string or a hexadecimal character string. The realm value is a case-sensitive character string with quotation marks on both ends, indicating a realm to be authenticated. The realm is determined by the server. Different servers may set their own realms. A server may also have multiple realms. The purpose of including the realm information in the challenge is to make the client know which range of user names is legal. The message that is used by the server to authenticate the terminal may not carry a message body.

To obtain the identity of a terminal user, the server needs to authenticate the terminal when the terminal user logs in to a channel or zaps a program or channel. Different from the authentication performed in case of user registration, this authentication can ensure that the user watching a program is a login user, thus ensuring the objectivity of viewing rate statistics. Various authentication modes are available, for example, HTTP digest authentication.

After the server receives the LogInInfo message from a user, the user must be authenticated so that the identity of the user logging in to a program and the reasonability of the LogInInfo message are determined before the data in the LogInInfo message is written to the database. The user does not know whether he/she is to be authenticated when sending the LogInInfo message. Thus, the server may send an HTTP 401 message that carries a challenge when receiving the LogInInf message, where the challenge needs the related authentication information such as user name and password to be sent to the server in encryption mode.

S206. The terminal sends an authentication response to the server.

The following lists contents of the response:
Authorization: Digest username="Mufasa",
realm="testrealm@host.com",
nonce="dcd98b7102dd2f0e8b11d0f600bfb0c093",
uri="/xxx/index.html",
qop=auth,
nc=00000001,
cnonce="0a4f113b",
response="6629fae49393a05397450978507c4ef1",
opaque="5ccc069c403ebaf9f0171e9517f40e41"

After receiving the challenge message, the terminal may encrypt its own user name and password and the challenge message, and then send the encrypted information to the server. This may eliminate the necessity of sending a password in plain text.

After the authentication succeeds, the server keeps messages received from the terminal. If the terminal fails to be authenticated, the user may continue watching a program, but the LogInInfo is invalid for the statistics of the server.

S201 to S206 are standard HTTP digest authentication modes, each field of which is defined in RFC 2617. The digest authentication mode is only an example.

S207. The server sends a 200 OK message to the terminal.

If the user name and password of the terminal are successfully authenticated by the server, the server sends a 200 OK message to the terminal. This embodiment is based on HTTP mode. Thus, 200 OK indicates that the authentication succeeds.

S208. The server sends program contents to the terminal.

If the terminal does not log out of the channel but continues receiving program contents within a specified time after logging in to a channel, the server may send program contents in broadcast mode or other modes. If the server sends program contents in broadcast mode, the terminal receives contents from the broadcast of the channel. If other modes (for example, streaming) are used, the server may send contents on a link with the terminal. In streaming mode, the server may send program contents through unicast or multicast.

S209. The terminal logs out of the current program.

The following lists contents of the logout message:
Http/1.1200OK
Server:Microsoft-IIS/5.0
Date:Sat,20Jul200720:31:22GMT
Accept-Ranges:bytes
Content-Length: 1205
Content-Type :text/html
Options:Post
LogInInfo

The user may log out of the current program at any time. That is, the user may log out of the current program at the end of the program or in the middle of the program. When the user logs out of the program, the terminal may be triggered to send a status message to the server.

S210. The terminal sends a LogOutInfo message to the server.

The following lists contents of the LogOutInfo message:
POST/HTTP/1.1
Date:Sat,20Jul200720:55:22GMT
Accept-Ranges:bytes
Accept-Language: zh-cn
Content-Length: 1205
Content-Type:text/xml
Host:host:www.samp.com:8080
Connection: close
<CR>
<?xml version="1.0" encoding="UTF-8"?>
<!-- edited with XMLSPY v5 rel. 4 U (http://www.xmlspy.com) by Registred (Registred) -->
<LogReport xmlns:xsi="http://www.w3.org/2001/XMLSchema-instance"
xsi:noNamespaceSchemaLocation="C:\Documents and
Settings\Administrator\Desktop\Edit3.xsd">
<Message_Type Message_Type_Type="LogOutInfo"/>
<User_ID User_ID_Type="abc"/>
<Service_ID Service_ID_Type="01"/>
<Program_ID Program_ID_Type="11"/>

In this embodiment, an HTTP POST method is used to send the XML data information in the LogOutInfo message to the server. The meaning in the POST message is the same as that in step 4. The XML data in the LogOutInfo message is the message body.

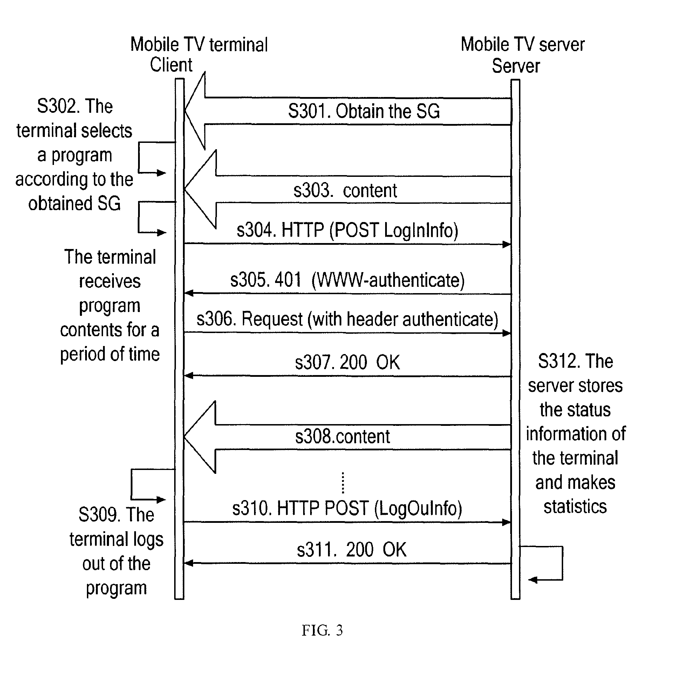

The LogOutInfo message carries a service ID and a user ID. The server records the logout time of the terminal, that is, end time. The LogOutInfo message of the terminal may use a format, as shown in FIG. 3. The message is sent through an interactive channel. The LogOutInfo message may be stored in an interactive server or a special server for recording statistics data.

The LogOutInfo message may be sent to the server in HTTP mode. Then, the server processes the LogOutInfo message and adds it to the database. The LogOutInfo message may also be sent in short message service (SMS) mode or other modes. The HTTP POST mode is only an example, and may also be replaced with other carrier modes. However, the principle and idea are the same.

S211. After receiving the LogOutInfo message properly, the server returns a 200 OK message to the terminal.

The 200 OK message may be returned through an interactive channel or other modes. In this embodiment, 200 OK indicates that the LogOutInfo message is sent to the server successfully. Other acknowledgement modes may also be used in different network environments, but the idea and principle are the same.

S212. After the terminal logs out of the program, the server stores the status information of the terminal.

The server adds the LogInInfo and LogOutInfo status information that is reported by the terminal to a local database or other servers. The server obtains required data from the LogInInfo and LogOutInfo messages. The server may have a general understanding of the subscription of the terminal and the program watched by the terminal according to such data. The status information stored in the server database may be the same as or similar to that in Table 4.

When the user receives a channel program by using a mobile terminal, the better way is to display the channel list through the SG. In this case, the terminal may select and watch a channel. When the terminal logs in to a channel in the channel list shown in the SG, the terminal may record the current user management information, including user ID, service ID and program ID. After the terminal logs in to a program of the channel for a certain period of time (for example, one minute), the user is watching the program. In this case, the terminal needs to send the user management information to the server. When the terminal logs out of the channel or the program, the terminal may record the user management information in case of logout, including user ID, service ID and program ID. The server may be an interactive server or a special server for recording the terminal information.

For example, the LogInInfo and LogOutInfo messages may use a data structure shown in Table 1 below:

**Table 1 Type of messages between the terminal and the server**

| **Message** | **Necessity** | **Direction** |
|---|---|---|
| LogInInfo | Mandatory | Client → Server |
| LogOutInfo | Mandatory | Client → Server |

The LogInInfo and LogOutInfo messages are mandatory. The directions are from the terminal to the server.

Table 2 and table 3 show data structure components of the LogInInfo and LogOutInfo messages respectively.

**Table 2 LogInInfo message components**

| **Information Element** | **Req** | **Type** | **Description** |
|---|---|---|---|
| Message-Type | Mandatory | String | Message type ID LogInInfo |
| User ID | Mandatory | String | Terminal user ID |
| Service ID | Mandatory | String | Service ID (that is, channel ID) |
| Program ID | Mandatory | String | ID of a program being watched |
| Online state | Mandatory | String | Online status |
| IMSI | Mandatory | String | Client identification code (IMSI) |
| Channel stat | Mandatory | String | Channel ID, used to identify the statistics of the channel |

**Table 3 LogOutInfo message components**

| **Information Element** | **Req** | **Type** | **Description** |
|---|---|---|---|
| Message-Type | Mandatory | String | Message type ID LogInInfo |
| User ID | Mandatory | String | Terminal user ID |
| Service ID | Mandatory | String | Service ID (that is, channel ID) |
| Program ID | Mandatory | String | ID of a program being watched |
| Online state | Mandatory | String | Online status |
| IMSI | Mandatory | String | Client identification code (IMSI) |
| Channel stat | Mandatory | String | Channel ID, used to identify the statistics of the channel |

The following shows the data structure represented by schema:

```
       <?xml version="1.0" encoding="UTF-8"?>
       <!-- edited with XMLSPY v5 rel. 4 U (http://www.xmlspy.com) by Registred
  (Registred) -->
       <xs:schema xmlns:xs="http://www.w3.org/2001/XMLSchema"
  elementFormDefault="qualified" attributeFormDefault="unqualified">
           <xs:element name="LogReport" type="LogReportType"/>
           <xs:complexType name="LogReportType">
               <xs:sequence>
                   <xs:element name="Message_Type">
                        <xs:complexType>
                            <xs:attribute name="Message_Type_Type" use="required">
                                <xs:simpleType>
                                    <xs:restriction base="xs:NMTOKEN">
                                         <xs:enumeration value="LogOutInfo"/>
                                         <xs:enumeration value="LogInInfo"/>
                                    </xs:restriction>
                                </xs:simpleType>
                           </xs:attribute>
                       </xs:complexType>
                   </xs:element>
                   <xs:element name="User_ID">
                       <xs:complexType>
                   <xs:attribute name="User_ID_Type" type="xs:string" use="required"/>
                       </xs:complexType>
                   </xs:element>
                   <xs:element name="Service_ID">
              <xs:complexType>
              <xs:attribute name="Service_ID_Type" type="xs:string" use="required"/>
                   </xs:complexType>
                   </xs:element>
                   <xs:element name="Program_ID">
                   <xs:complexType>
              <xs:attribute name="Program_ID_Type" type="xs:string" use="required"/>
                       </xs:complexType>
                  </xs:element>
                  <xs:element name="Online_state">
                       <xs:complexType>
              <xs:attribute name="Online_state_Type" type="xs:string" use="required"/>
                       </xs:complexType>
                  </xs:element>
                   <xs:element name="IMSI">
                       <xs:complexType>
                   <xs:attribute name="IMSI_Type" type="xs:string" use="required"/>
                       </xs:complexType>
                   </xs:element>
                   <xs:element name="Channel_stat">
                       <xs:complexType>
              <xs:attribute name="Channel_stat_Type" type="xs:string" use="required"/>
                       </xs:complexType>
                   </xs:element>
               </xs:sequence>
          </xs:complexType>
       </xs:schema>
```

The above messages are sent by the terminal to the server, and stored by the server. A data structure may also be constructed in the server to store the status information to be recorded, as shown in Table 4.

**Table 4 Statistics table**

| **User ID** | **Service ID** | **Program ID** | **StartTime** | **EndTime** |
|---|---|---|---|---|
| 01234 | 01 | 011 | 10:50 | 11:30 |
| 02462 | 01 | 011 | 10:20 | 11:15 |
| 55208 | 02 | 021 | 12:05 | 12:25 |
| 04567 | 03 | 032 | 12:00 | 12:30 |
| 49653 | 02 | 021 | 12:15 | 12:25 |

The following shows the schema of the data structure:

```
       <?xml version="1.0" encoding="UTF-8"?>
       <!--W3C Schema generated by XMLSPY v5 rel. 4 U (http://www.xmlspy.com)-->
       <xs:schema xmlns:xs="http://www.w3.org/2001/XMLSchema"
  elementFormDefault="qualified">
          <xs:element name="Stat">
              <xs:complexType>
                   <xs:attribute name="User_ID" type="xs:string" use="required"/>
                   <xs:attribute name="Service_ID" type="xs:string" use="required"/>
                   <xs:attribute name="Program_ID" type="xs:string" use="required"/>
                   <xs:attribute name="StartTime" type="xs:string" use="required"/>
                   <xs:attribute name="EndTime" type="xs:string" use="required"/>
              </xs:complexType>
          </xs:element>
       </xs:schema>
```

In the above table, some data is simulated to indicate information contents stored in the server. In this example, each user has a unique user ID, and different channels have different service IDs. For example, in the above table, a user with the user ID 01234 and a user with the user ID 02462 are watching a same channel with the service ID 01; they are also watching a same program with the program ID 011. They begin to watch the program at 10:50 a.m. and 10:20 a.m respectively. A user with the user ID 55208 and a user with the user ID 49653 are watching a channel with the service ID 02, which indicates that they are also watching a same program with the program ID 021. However, the former user begins to watch the program at 12:05, while the latter user begins to watch the program at 12:15. After the program ends, both users stop watching. Thus, the end time of both users is 12:25.

The server may store records in various forms. In this solution, only an example is given. The statistics data may also be organized in other data structures, but the idea and method are the same.

In Table 4, a channel is associated with a server. A channel has only one program at a point of time. The service ID and program ID are specified by the CP. A channel may also provide the user with only one program within a certain period of time. Attributes such as user ID, service ID, program ID, end time and start time are only examples of the status information of a program watched by the terminal, and may be changed and extended when necessary.

In this embodiment, the server may be an interactive server or a special server for storing the statistics information. In this embodiment, there are few message contents, and statistics of data can be made easily, which lessens the burden of the server. In addition, if the server can support a certain number of users, adding such statistics does not change the number of users supported by the server.

In this embodiment, the LogInInfo and LogOutInfo messages involved in the transmission of user management information are examples only. Other similar methods where the status information is carried in messages may also be used to transmit the status information, but the principle and idea are the same.

The third embodiment of the present invention provides a method for sending user management information to the server when a terminal logs in to a program and logs out of the program and making statistics of programs or user preferences by the server according to the user management information. With this method, the server may further know details about the program and channel watched by the terminal.

As shown in FIG. 3, when a terminal user watches a program at a time, the terminal may log in to a channel where the program is located. When the terminal receives the program for a certain period of time, the terminal may send the user management information of the terminal, such as service ID, program ID, user ID and channel ID, to the server. The user management information may be sent to the server in the form of a message. The server may judge whether to store the received user management information of the terminal according to a local policy, and give a response. After logging out of the received program, the terminal may interact with the server as follows: The terminal sends the user management information in case of logout, such as service ID, program ID, user ID and channel ID, to the server.

The server makes statistics of the stored programs that the terminal logs in to according to the user management information.

The server may calculate the total program login duration of the user according to the recorded login time and logout time of the terminal. The server may also find out by calculation a channel and program with the highest viewing rate according to the user ID, service ID, program ID and channel ID.

According to such statistics, the server may add more network resources to the channel and program with the highest viewing rate to ensure the watching quality of the program. The CP may also adjust channels and programs according to such statistics. For example, the CP may play the program with the highest viewing rate for a longer time or develop programs according to interests of users.

As shown in FIG. 3, the process includes the following steps:

S301. The terminal is started, and obtains the SG.

The mobile TV terminal can receive a channel program only when the terminal is already registered in the server and is already activated to log in to a channel program.

S302. The terminal without subscribed channels re-subscribes to channels according to the obtained SG.

The determined subscription relationship describes the channels that the user subscribes to in the SG. It may be stored in the server in the form of a table to synchronize with the terminal.
A. The subscription mode may be external: For example, the subscription may be performed through network access or phone dial-up. The subscription result may be recorded in the server.
B. The subscription mode may also be internal: The subscription may be performed by the terminal in the SG. When the terminal subscribes to or unsubscribes from a channel, the subscription relationship table in the server may be changed, and synchronized with the terminal.
C. The server may synchronize the subscription relationship with the terminal. The server may synchronize the subscription relationship with the online user when the terminal is started or periodically according to a policy of the server. The subscription relationship may be maintained or synchronized with the server by the terminal. When the user performs subscription, the local subscription relationship may be sent to the server in HTTP POST mode to synchronize with the server.

After the user logs in to a channel, the user may receive an SG. The SG has a channel content forecast. The terminal may obtain a channel list through the SG, and receive program contents according to the channels in the channel list.

If the terminal receives program contents in broadcast mode, the terminal selects a desired channel according to the received SG. After the user terminal selects a channel ID in the SG, the terminal begins to receive programs.

S303. The server sends program contents to the terminal.

The server may send contents in broadcast mode or in streaming mode.

If the terminal does not log out after receiving the program contents for a certain period of time (may be set to 1 minute), the information will be sent to the server. The server may record the login time of the terminal.

After logging in to a channel, the terminal needs to record the current user management information locally. The specified time may be preset by the network or CP. The time is used by the terminal to judge whether to send statistics information to the server. If the channel login time of the terminal exceeds the preset time, the user is watching a program; if the terminal logs out of the channel within the preset time, the user does not watch the channel program.

S304. The terminal sends a LogInInfo message to the server.

The following lists contents of the LogInInfo message:
POST/HTTP/1.1
Date:Sat,20Jul200720:31:22GMT
Accept-Ranges: bytes
Accept-Language: zh-cn
Content-Length: 1205
Content-Type:text/xml
Host:host: www.sample.com:8080
Connection: close
<CR>
<?xml version="1.0" encoding="UTF-8"?>
<!-- edited with XMLSPY v5 rel. 4 U (http://www.xmlspy.com) by Registred (Registred) -->
<LogReport xmlns:xsi="http://www.w3.org/2001/XMLSchema-instance"
xsi:noNamespaceSchemaLocation="C:\Documents and
Settings\Administrator\Desktop\Edit3.xsd">
<Message_Type Message_Type_Type="LogInInfo"/>
<User_ID User_ID_Type="abc"/>
<Service_ID Service_ID_Type="01"/>
<Program_ID Program_ID_Type="11"/>

In this embodiment, the LogInInfo message is added behind an HTTP POST header as a message body in the XML format, and is sent to the server. The message header is separated from the message body by a <CR> symbol. The upper part is the message header and the lower part is the message body. The message header describes a host and port to be requested. When the connection mode is "close", continuous connections are unnecessary. HTTP1.1 supports discontinuous connections.

The LogInInfo message carries a service ID, a user ID (for example, IMSI information) and other login status information. The LogInInfo message of the terminal may use a format, as shown in FIG. 2. The LogInInfo message is sent through an interactive channel. The LogInInfo message may be stored in an interactive server or a special server for recording statistics data. In this embodiment, the LogInInfo message is sent to the server in the HTML format.

The LogInInfo may be sent through multiple methods, for example, the HTTP POST method. This is an example only. If other methods are available, the principle and idea are the same.

When the terminal receives the program for a certain period of time, the terminal may report the LogInInfo message to the server. Meanwhile, the server sets the user status to be online. The terminal obtains the SG and other related data from the server. When related data in the server is updated, the server may notify the online user of updating data, and the notification may be pushed to the online terminal. In this case, the terminal may perceive the data changes in the server and retrieve the data immediately.

### S305. The server authenticates the terminal.

The following lists contents of an authentication message:
HTTP/1.1 401 Unauthorized
Server: Microsoft-IIS/5.1
WWW-Authenticate: Digest
realm="testrealm@host.com",
qop="auth,auth-int",
nonce="dcd98b7102dd2r0e8b11d0f600bfb0c093",
opaque="5ccc069c403ebaf9f0171e9517f40e41"
<CR>

After receiving a POST message from the terminal, the server needs to authenticate the terminal by sending a challenge to the terminal. Sending a challenge is to give the client an HTTP response, the status code of which is 401 (Unauthorized) and which carries a message header WWW-Authenticate. The client knows that the URI needs to be authenticated when receiving the HTTP response.
domain: a URI list, indicating domains to be protected. It may be a list, which tells the user that these URIs should be authenticated in the same way. If the domain field is null or ignored, all the URIs in the server need to be authenticated.
nonce: a random character string, which varies each time. The nonce field is related to the algorithm. The algorithm is similar to Base64 encryption: time-stamp H (time-stamp ":"ETag ":" private-key), where time-stamp is a server clock and ETag is a requested Etag header.
opaque: generated by the server and returned along with a request sent by the client. The opaque field is a Base64 string or a hexadecimal character string. The realm value is a case-sensitive character string with quotation marks on both ends, indicating a realm to be authenticated. The realm is determined by the server. Different servers may set their own realms. A server may also have multiple realms. The purpose of including the realm information in the challenge is to make the client know which range of user names is legal. The message that is used by the server to authenticate the terminal may not carry a message body.

The server needs to authenticate the terminal to obtain the identity of the terminal user logging in to a channel. Different from the authentication performed in case of user registration, this authentication can ensure that the user watching a program is a login user, thus ensuring the objectivity of viewing rate statistics. Various authentication modes may be available, for example, HTTP digest authentication.

After the server receives the LogInInfo message from a user, the user must be authenticated so that the identity of the user logging in to a program and the reasonability of the LogInInfo message are determined before the data in the LogInInfo message is written to the database. The user does not know whether he/she is to be authenticated when sending the LogInInfo message. Thus, the server may send an HTTP 401 message that carries a challenge when receiving the LogInInf message, where the challenge needs the related authentication information such as user name and password to be sent to the server in encryption mode.

S306. The terminal sends an authentication response to the server.

The following lists contents of the response:
Authorization: Digest username="Mufasa",
realm="testrealm@host.com",
nonce="dcd98b7102dd2f0e8b11d0f600bfb0c093",
uri="/xxx/index.html",
qop=auth,
nc=00000001,
cnonce="0a4f113b",
response="6629fae49393a05397450978507c4ef1",
opaque="5ccc069c403ebaf9f0171e9517f40e41"

After receiving the challenge message, the terminal may encrypt its own user name and password and the challenge message, and then send the encrypted information to the server. This may eliminate the necessity of sending a password in plain text.

After the authentication succeeds, the server keeps messages received from the terminal. If the terminal fails to be authenticated, the user may continue watching a program, but the LogInInfo is invalid to the server to statistic.

S301 to S306 are standard HTTP digest authentication modes, each field of which is defined in RFC 2617. The digest authentication mode is only an example.

S307. The server sends a 200 OK message to the terminal.

If the user name and password of the terminal are successfully authenticated by the server, the server sends a 200 OK message to the terminal. This embodiment is based on HTTP mode. Thus, 200 OK indicates that the authentication succeeds.

S308. The server sends program contents to the terminal.

If the terminal does not log out of the channel but continues receiving program contents within a specified time after logging in to a channel, the server may send program contents in broadcast mode or other modes. If the server sends program contents in broadcast mode, the terminal receives contents from the broadcast of the channel. If other modes (for example, streaming) are used, the server may send contents on a link with the terminal. In streaming mode, the server may send program contents through unicast or multicast.

S309. The terminal logs out of the current program.

The user may log out of the current program at any time. That is, the user may log out of the current program at the end of the program or in the middle of the program. When the user logs out of the program, the terminal may be triggered to send a status message to the server.

S310. The terminal sends a LogOutInfo message to the server.

The following lists contents of the LogOutInfo message:
POST/HTTP/1.1
Date:Sat,20Jul200720:55:22GMT
Accept-Ranges:bytes
Accept-Language: zh-cn
Content-Length: 1205
Content-Type:text/xml
Host:host:www.samp.com:8080
Connection: close
<CR>
<?xml version="1.0" encoding="UTF-8"?>
<!-- edited with XMLSPY v5 rel. 4 U (http://www.xmlspy.com) by Registred (Registred) -->
<LogReport xmlns:xsi="http://www.w3.org/2001/XMLSchema-instance"
xsi:noNamespaceSchemaLocation="C:\Documents and
Settings\Administrator\Desktop\Edit3.xsd">
<Message_Type Message_Type_Type="LogOutInfo"/>
<User_ID User_ID_Type="abc"/>
<Service_ID Service_ID_Type="01"/>
<Program_ID Program_ID_Type="11"/>

In this embodiment, an HTTP POST method is used to send the XML data information in the LogOutInfo message to the server. The meaning in the POST message is the same as that in step 4. The XML data in the LogOutInfo message is the message body.

The LogOutInfo message carries a service ID, a user ID and current logout time end time. The LogOutInfo message of the terminal may use a format, as shown in FIG. 3. The message is sent through an interactive channel. The LogOutInfo message may be stored in an interactive server or a special server for recording statistics data.

The LogOutInfo message may be sent to the server in HTTP mode. Then, the server processes the LogOutInfo message and adds it to the database. The LogOutInfo message may also be sent in SMS mode or other modes. The HTTP POST mode is only an example, and may also be replaced with other carrier modes. However, the principle and idea are the same.

S311. After receiving the LogOutInfo message properly, the server returns a 200 OK message to the terminal.

The 200 OK message may be returned through an interactive channel or other modes. In this embodiment, 200 OK indicates that the LogOutInfo message is sent to the server successfully. Other acknowledgement modes may also be available in different network environments, but the idea and principle are the same.

S312. After the terminal logs out of a program, the server stores the status information of the terminal and makes statistics.

The server makes statistics of the viewing rate of a channel or program according to the LogInInfo and LogOutInfo status information reported by the terminal.

The following describes two modes for making statistics of the viewing rate:
A. The SG may include channel IDs. In this case, when the server needs to make statistics of the viewing rate of a channel in a time segment, the server may set a channel ID indicating that the viewing rate statistics will be made in the SG. For example, CCTV2 stat = TRUE 2007-08-09 12:00-13:00, which indicates the CCTV2 channel is within the time segment of 2007-08-09 12:00-13:00. If a user selects CCTV2, the user needs to send a message to the server to indicate that the user is watching or finishes watching the channel, based on which the server makes statistics of the viewing rate or makes other related statistics.
B. The server sends a message to all or some of online user terminals, requiring these users to feed back whether they are watching the channel; the user terminals reply to the message and carry related information to indicate the reply to the request of the server. In this case, related data statistics may be made in the server.

In addition, the server may make statistics of the program preferences of the users. The server calculates the total duration of watching the program by the user according to the recorded start time and end time when the terminal watches the program. The server may find out by calculation which program ID involves most users and which service ID involves most users according to different programs. In addition, the server may make statistics of the user preferences according to the previous data that the users store in the server, and find out which program ID and service ID involve most users. The CP may provide the users with a monthly fee service according to the data. The status information that the users store in the server may be similar to that in Table 8.

When the user receives a channel program by using a mobile terminal, the better way is to display the channel list through the SG. In this case, the terminal may select and watch a channel. When the terminal logs in to a channel in the channel list shown in the SG, the terminal may record the current user management information, including user ID, service ID and program ID. After the terminal logs in to a program of the channel for a certain period of time (for example, one minute), the user is watching the program. In this case, the terminal needs to send the user management information to the server. When the terminal logs out of the channel or the program, the terminal may record the user management information in case of logout, including user ID, service ID and program ID. The server may be an interactive server or a special server for recording the terminal information. Table 5 shows the data structures of the LogInInfo and LogOutInfo messages.

**Table 5 T ype of messages between the terminal and the server**

| **Message** | **Necessity** | **Direction** |
|---|---|---|
| LogInInfo | Mandatory | Client → Server |
| LogOutInfo | Mandatory | Client → Server |

The LogInInfo and LogOutInfo messages are mandatory. The directions are from the terminal to the server.

Table 6 and table 7 show data structure components of the LogInInfo and LogOutInfo messages.

**Table 6 LogInInfo message components**

| **Information Element** | **Req** | **Type** | **Description** |
|---|---|---|---|
| Message-Type | Mandatory | String | Message type ID LogInInfo |
| User ID | Mandatory | String | Terminal user ID |
| Service ID | Mandatory | String | Service ID (That is, channel ID) |
| Program ID | Mandatory | String | ID of a program being watched |
| Online state | Mandatory | String | Online status |
| IMSI | Mandatory | String | Client identification code (IMSI) |
| Channel stat | Mandatory | String | Channel ID, used to identify the statistics of the channel |

**Table 7 LogOutInfo message components**

| **Information Element** | **Req** | **Type** | **Description** |
|---|---|---|---|
| Message-Type | Mandatory | String | Message type ID LogInInfo |
| User ID | Mandatory | String | Terminal user ID |
| Service ID | Mandatory | String | Service ID (That is, channel ID) |
| Program ID | Mandatory | String | ID of a program being watched |
| Online state | Mandatory | String | Online status |
| IMSI | Mandatory | String | Client identification code (IMSI) |
| Channel stat | Mandatory | String | Channel ID, used to identify the statistics of the channel |

The following shows the data structure represented by schema:

```
       <?xml version="1.0" encoding="UTF-8"?>
       <!-- edited with XMLSPY v5 rel. 4 U (http://www.xmlspy.com) by Registred
  (Registred) -->
       <xs:schema xmlns:xs="http://www.w3.org/2001/XMLSchema"
  elementFormDefault="qualified" attributeFormDefault="unqualified">
          <xs:element name="LogReport" type="LogReportType"/>
          <xs:complexType name="LogReportType">
              <xs:sequence>
                   <xs:element name="Message_Type">
                       <xs:complexType>
                           <xs:attribute name="Message_Type_Type" use="required">
                                <xs: simpleType>
                                    <xs:restriction base="xs:NMTOKEN">
                                         <xs:enumeration value="LogOutInfo"/>
                                         <xs:enumeration value="LogInInfo"/>
                                    </xs:restriction>
                                </xs:simpleType>
                            </xs:attribute>
                       </xs:complexType>
                   </xs:element>
                   <xs:element name="User_ID">
                       <xs:complexType>
                   <xs:attribute name="User_ID_Type" type="xsatring" use="required"/>
                       </xs:complexType>
                   </xs:element>
                   <xs:element name="Service_ID">
                       <xs:complexType>
               <xs:attribute name="Service_ID_Type" type="xs:string" use="required"/>
                       </xs:complexType>
                   </xs:element>
                   <xs:element name="Program_ID">
                       <xs:complexType>
               <xs:attribute name="Program_ID_Type" type="xsatring" use="required"/>
                       </xs:complexType>
                   </xs:element>
                   <xs:element name="Online_state">
                        <xs:complexType>
               <xs:attribute name="Online_stae_Type" type="xs:string" use="required"/>
                        </xs:complexType>
                   </xs:element>
                   <xs:element name="IMSI">
                        <xs:complexType>
                   <xs:attribute name="IMSI_Type" type="xsatring" use="required"/>
                        </xs:complexType>
                   </xs:element>
                   <xs:element name="Channel_stat">
                       <xs:complexType>
              <xs:attribute name="Channel_stat_Type" type="xs:string" use="required"/>
                       </xs:complexType>
                   </xs:element>
              </xs: sequence>
          </xs:complexType>
       </xs:schema>
```

The above messages are sent by the terminal to the server, and stored by the server. A data structure may also be constructed in the server to store the status information (user management information) to be recorded:

**Table 8 S tatistics table**

| **User ID** | **Service ID** | **Program ID** | **StartTime** | **End Time** | **Time** |
|---|---|---|---|---|---|
| 1234 | 01 | 11 | 10:50 | 11:30 | 40m |
| 2462 | 01 | 11 | 10:20 | 11:15 | 55m |
| 55208 | 02 | 21 | 12:05 | 12:25 | 20m |
| 4567 | 03 | 32 | 12:00 | 12:30 | 30m |
| 49653 | 02 | 21 | 12:15 | 12:25 | 10m |

The following shows the schema of the data structure:

```
       <?xml version="1.0" encoding="UTF-8"?>
       <!--W3C Schema generated by XMLSPY v5 rel. 4 U (http://www.xmlspy.com)-->
       <xs:schema xmlns:xs="http://www.w3.org/2001/XMLSchema"
  elementFormDefault="qualified">
          <xs:element name="Stat">
              <xs:complexType>
                   <xs:attribute name="User_ID" type="xs:string" use="required"/>
                   <xs:attribute name="Service_ID" type="xs:string" use="required"/>
                   <xs:attribute name="Program_ID" type="xs:string" use="required"/>
                   <xs:attribute name="StartTime" type="xs:string" use="required"/>
                   <xs:attribute name="EndTime" type="xs:string" use="required"/>
              </xs:complexType>
          </xs:element>
       </xs:schema>
```

In Table 8, some data is simulated to indicate information contents stored in the server. In this example, each user has a unique user ID, and different channels have different service IDs. For example, in the above table, a user with the user ID 01234 and a user with the user ID 02462 are watching a channel with the service ID 01; they are also watching a same program with the program ID 011. They begin to watch the program at 10:50 and 10:20 respectively. A user with the user ID 55208 and a user with the user ID 49653 are watching a channel with the service ID 02; they are also watching a same program with the program ID 021. However, the user with the user ID 55208 begins to watch the program at 12:05, while the user with the user ID 49653 begins to watch the program at 12:15. After the program ends, both users stop watching. Thus, the end time of both users is 12:25. The Time attribute indicates the duration of watching a program by the user. Table 8 shows that the watching duration of a user with the user ID 55208 is equal to that of a user with the user ID 49653.

The server may store records in various forms. In this solution, only an example is given. The statistics data may also be organized in other data structures, but the idea and method are the same.

In Table 8, a channel is associated with a server. A channel has only one program at the same time. The service ID and program ID are specified by the program CP. A channel may provide the user with only one program within a certain period of time. Attributes such as user ID, service ID, program ID, end time and start time are only examples of the status information of a program watched by the terminal, and may be changed and extended when necessary.

The start time and end time indicate the login time and logout time of the terminal recorded in the server. The start time and end time define a period in which the terminal records the program contents broadcasted currently. The Time value of the period is equal to the difference between the start time and the end time, indicating the duration of watching the program continuously by the user. Each program is sent by the server to the terminal in the form of packets frame by frame. Each frame of a packet has a time stamp that is added by the server. Thus, the login time may be extracted from the first frame of the packet, and the logout time may be extracted from the last frame of the packet. The difference between the login time and the logout time is the channel login duration of the terminal. The time of the packet is the network time that is independent of the local time of the terminal and is determined by the server. Thus, the local time of the terminal will not affect the channel login duration of the terminal. This is reasonable to the statistics of the watching time of the user, and can ensure that the recorded time is the watching time. In addition, the server can obtain an accurate statistics result.

In this embodiment, the server may be an interactive server or a special server for storing the statistics information. In this embodiment, there are few message contents, and statistics of data can be made easily, which lessens the burden of the server. In addition, if the server can support a certain number of users, adding such statistics does not change the number of users supported by the server.

In this embodiment, the LogInInfo and LogOutInfo messages involved in the transmission of user management information (status information) are examples only. Other similar methods where the status information is carried in messages may also be used to transmit the status information, but the principle and idea are the same.

The fourth embodiment of the present invention provides a method for sending user management information to the server and completing interactive update with the terminal by the server according to the user management information when a terminal logs in to a program and logs out of a program. After a user subscribes to a channel successfully, the user may participate in program interactions during the watching process, for example, discussions of interactive topics and interactive games. The interactive update between the terminal and the server may enable the user to watch the program and participate in interactions in the local terminal.

As shown in FIG. 3, when the terminal logs in to a program, the server may send program interaction information to the terminal if the program involves interactive topics. If the interactive information is updated during the playing of the program, the server may send the updated interactive information to the terminal according to the status information of the terminal. Generally, the interactive information may be delivered or updated during the watching of an interactive program. The interactive information may be delivered to the terminal with the program contents, but the type of interactive information is always the same in a program. Thus, the user may participate in the interactive program continuously so long as the interactive information of the program is updated. In this case, the updated interactive information may be sent according to the status information that the terminal sends to the server.

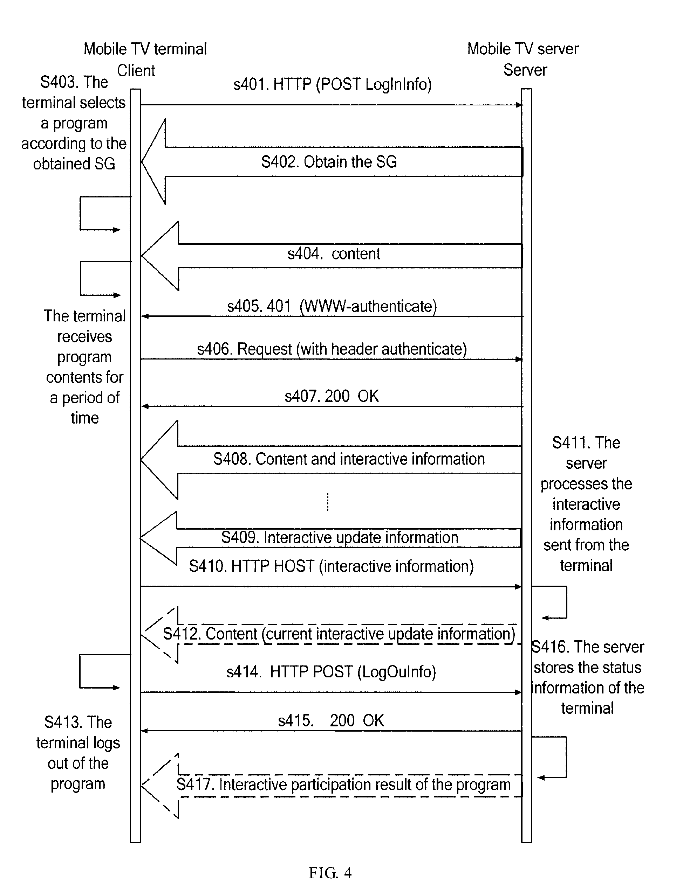

As shown in FIG. 4, the process includes the following steps:

S401. The terminal is started, and sends a LogInInfo message to the server.

The following lists contents of the LogInInfo message:
POST/HTTP/1.1
Date:Sat,20Ju1200720:31:22GMT
Accept-Ranges:bytes
Accept-Language: zh-cn
Content-Length: 1205
Content-Type:text/xml
Host:host: www.sample.com:8080
Connection: close
<CR>
<?xml version="1.0" encoding="UTF-8"?>
<!-- edited with XMLSPY v5 rel. 4 U (http://www.xmlspy.com) by Registred (Registred) -->
<LogReport xmlns:xsi="http://www.w3.org/2001/XMLSchema-instance"
xsi:noNamespaceSchemaLocation="C:\Documents and
Settings\Administrator\Desktop\Edit3.xsd">
<Message_Type Message_Type_Type="LogInInfo"/>
<User_ID User_ID_Type="abc"/>
<Service_ID Service_ID_Type="01"/>
<Program_ID Program_ID_Type="11"/>

In this embodiment, the LogInInfo message is added behind an HTTP POST header as a message body in the XML format, and is sent to the server. The message header is separated from the message body by a <CR> symbol. The upper part is the message header and the lower part is the message body. The message header describes a host and port to be requested. When the connection mode is "close", continuous connections are unnecessary. HTTP1.1 supports discontinuous connections.

The LogInInfo message carries a service ID, a user ID (for example, IMSI information) and other login status information. The LogInInfo message of the terminal may use a format, as shown in FIG. 2. The LogInInfo message is sent through an interactive channel. The LogInInfo message may be stored in an interactive server or a special server for recording statistics data. In this embodiment, the LogInInfo message is sent to the server in the HTML format.

The LogInInfo message may be sent through multiple methods, for example, the HTTP POST method. This is an example only. If other methods are available, the principle and idea are the same.

When the terminal is started, the terminal reports the LogInInfo message to the server. Meanwhile, the server sets the user status to be online. The terminal obtains the SG and other related data from the server. When related data in the server is updated, the server may notify the online user of updating data, and the notification may be pushed to the online terminal. In this case, the terminal may perceive the data changes in the server and retrieve the data immediately.

S402. The terminal obtains the SG.

The mobile TV terminal can receive a channel program only when the terminal is already registered in the server and is already activated to log in to a channel program.

S403. The terminal without subscribed channels subscribes to channels according to the obtained SG.

The determined subscription relationship describes the channels that the user subscribes to in the SG. It may be stored in the server in the form of a table to synchronize with the terminal.
A. The subscription mode may be external: For example, the subscription may be performed through network access or phone dial-up. The subscription result may be recorded in the server.
B. The subscription mode may also be internal: The subscription may be performed by the terminal in the SG. When the terminal subscribes to or unsubscribes from a channel, the subscription relationship table in the server may be changed, and synchronized with the terminal.
C. The server may synchronize the subscription relationship with the terminal. The server may synchronize the subscription relationship with the online user when the terminal is started or periodically according to a policy of the server. The subscription relationship may be maintained by the terminal and synchronized with the server. When the user performs subscription, the local subscription relationship may be sent to the server in HTTP POST mode to synchronize with the server.

After the user logs in to a channel, the user may receive an SG. The SG has a channel content forecast. The terminal may obtain a channel list through the SG, and receive program contents according to the channels in the channel list.

If the terminal receives program contents in broadcast mode, the terminal selects a desired channel according to the received SG. After the user terminal selects a channel ID in the SG, the terminal begins to receive programs.

S404. The server sends program contents to the terminal.

The server may send contents in broadcast mode or in streaming mode.

If the terminal does not log out after receiving the program contents for a certain period of time (may be set to 1 minute), the information will be sent to the server. The server may record the login time of the terminal.

After logging in to a channel, the terminal needs to record the current status information locally. The certain period of time may be preset by the network or CP. The time is used by the terminal to judge whether to send statistics information to the server. If the channel login time of the terminal exceeds the preset time, the user is watching a program; if the terminal logs out of the channel within the preset time, the user does not watch the channel program.

S405. The server authenticates the terminal.

The following lists contents of an authentication message:
HTTP/1.1 401 Unauthorized
Server: Microsoft-IIS/5.1
WWW-Authenticate: Digest
realm="testrealm@host.com",
qop="auth,auth-int",
nonce="dcd98b7102dd2f0e8b11d0f600bfb0c093",
opaque="5ccc069c403ebaf9f0171e9517f40e41"
<CR>

After receiving a POST message from the terminal, the server needs to authenticate the terminal by sending a challenge to the terminal. Sending a challenge is to give the client an HTTP response, the status code of which is 401 (Unauthorized) and which carries a message header WWW-Authenticate. The client knows that the URI needs to be authenticated when receiving the HTTP response.
domain: a URI list, indicating domains to be protected. It may be a list, which tells the user that these URIs should be authenticated in the same way. If the domain field is null or ignored, all the URIs in the server need to be authenticated.
nonce: a random character string, which varies each time. The nonce field is related to the algorithm. The algorithm is similar to Base64 encryption: time-stamp H (time-stamp ":"ETag ":" private-key), where time-stamp is a server clock and ETag is a requested Etag header.
opaque: generated by the server and returned along with a request sent by the client. The opaque field is a Base64 string or a hexadecimal character string. The realm value is a case-sensitive character string with quotation marks on both ends, indicating a realm to be authenticated. The realm is determined by the server. Different servers may set their own realms. A server may also have multiple realms. The purpose of including the realm information in the challenge is to make the client know which range of user names is legal. The message that is used by the server to authenticate the terminal may not carry a message body.

The server needs to authenticate the terminal to obtain the identity of the terminal user logging in to a channel. Different from the authentication performed in case of user registration, this authentication can ensure that the user watching a program is a login user, thus ensuring the objectivity of viewing rate statistics. Various authentication modes may be available, for example, HTTP digest authentication.

After the server receives the LogInInfo message from a user, the user must be authenticated so that the identity of the user logging in to a program and the reasonability of the LogInInfo message are determined before the data in the LogInInfo message is written to the database. The user does not know whether he/she is to be authenticated when sending the LogInInfo message. Thus, the server may send an HTTP 401 message that carries a challenge when receiving the LogInInf message, where the challenge needs related authentication information such as user name and password to be sent to the server in encryption mode.

S406. The terminal sends an authentication response to the server.

The following lists contents of the response:
Authorization: Digest username="Mufasa",
realm="testrealm@host.com",
nonce="dcd98b7102dd2f0e8b11d0f600bfb0c093",
uri="/xxx/index.html",
qop=auth,
nc=00000001,
cnonce="0a4f113b",
response="6629fae49393a05397450978507c4ef1",
opaque="5ccc069c403ebaf9f0171e9517f40e41"

After receiving the challenge message, the terminal may encrypt its own user name and password and the challenge message, and then send the encrypted information to the server. This may eliminate the necessity of sending a password in plain text.

After the authentication succeeds, the server keeps messages received from the terminal. If the terminal fails to be authenticated, the user may continue watching a program, but the LogInInfo message is invalid.

S401 to S406 are standard HTTP digest authentication modes, each field of which is defined in RFC 2617. The digest authentication mode is only an example.

S407. The server sends a 200 OK message to the terminal.

If the user name and password of the terminal are successfully authenticated by the server, the server sends a 200 OK message to the terminal. This embodiment is based on HTTP mode. Thus, 200 OK indicates that the authentication succeeds.

S408. The server sends program contents and interactive information to the terminal.

If the terminal does not log out of the channel but continues receiving program contents within a specified time after logging in to a channel, the server may send program contents in broadcast mode or other modes. If the server sends program contents in broadcast mode, the terminal receives contents from the broadcast of the channel. If other modes (for example, streaming) are used, the server may send contents on a link with the terminal. In streaming mode, the server may send program contents through unicast or multicast.

Interactive media documents and interactive media objects thereof may be delivered with the program contents or before the user watches the program contents.

S409. The server sends an interactive update message to the terminal.

When the interactive information of interactive programs is changed, the server may send the updated interactive information to the terminal. Before sending the updated interactive information, the server needs to judge the watching details (for example, the channel ID and user ID) of the terminal according to the LogInInfo information reported by the terminal. With such information, the server can send the updated interactive information more accurately to the user watching the program. The updated interactive information may be sent through many methods. For example, it may be carried in the message body or sent through short messages, but the principle and idea are the same.

S410. The terminal user sends interactive information to the server.

The following lists contents of the interactive information:
POST/HTTP/1.1
Date:Sat,20Jul200720:51:22GMT
Accept-Ranges:bytes
Accept-Language: zh-cn
Content-Length: 1205
Content-Type:text/xml
Host:host:www.samp.com:8080
Connection: close
<CR>
(User interactive information)

When there are interactive topics during the program playing process, the user may send his/her choices to the server in the form of a message body by using the HTTP POST method or send his/her discussion contents to the server in SMS mode to achieve the objective of program interaction. The user may edit messages to express opinions by making a simple choice or providing detailed descriptions, which does not affect the terminal in receiving subsequent program contents from the server. Thus, during the interaction period, the user may perform the interactive operations without interrupting the program.

S411. The server receives interactive information from the user, and processes the received interactive information.

After receiving the interactive information from the user, the interactive server may process the interactive information immediately or after the program ends according to a policy of the interactive server. The interactive server may extract the interactive information of the user, and send an interactive content to the user according to the interactive information content. For example, when the user selects segment A in a selective interactive program, the interactive server may play segment A according to the user's selection.

S412. The server sends the interactive result that is processed completely to the terminal along with the program contents.

The user may send the interactive statistics result processed by the server to the terminal user immediately after an interaction ends, so that the terminal user can immediately know the interactive result or overall user participation details of the interactive program. Thus, the current interactive result that is sent may be a personal interactive result or interactive results of all the participants.

An interactive program may involve multiple interaction processes. In this embodiment, dotted lines indicate returned participation results, and mean that the participation results may or may not be returned to the user. This is determined according to the interactive server and the policy of the interactive program.

S413. The terminal logs out of the current program.

The user may log out of the current program at any time. That is, the user may log out of the current program at the end of the program or in the middle of the program. When the user logs out of the program, the terminal may be triggered to send a status message to the server.

S414. The terminal sends a LogOutInfo message to the server.

The following lists contents of the LogOutInfo message:
POST/HTTP/1.1
Date:Sat,20Jul200720:55:22GMT
Accept-Ranges:bytes
Accept-Language: zh-cn
Content-Length: 1205
Content-Type:text/xml
Host:host: www.samp.com:8080
Connection: close
<CR>
<?xml version="1.0" encoding="UTF-8"?>
<!-- edited with XMLSPY v5 rel. 4 U (http://www.xmlspy.com) by Registred (Registred) -->
<LogReport xmlns:xsi="http://www.w3.org/2001/XMLSchema-instance"
xsi:noNamespaceSchemaLocation="C:\Documents and
Settings\Administrator\Desktop\Edit3.xsd">
<Message_Type Message_Type_Type="LogOutInfo"/>
<User_ID User_ID_Type="abc"/>
<Service_ID Service_ID_Type="01"/>
<Program_ID Program_ID_Type="11"/>

In this embodiment, an HTTP POST method is used to send the XML data information in the LogOutInfo message to the server. The meaning in the POST message is the same as that in S404. The message body includes XML data of the LogOutInfo message.

The LogOutInfo message carries a service ID and a user ID. The server records the logout time of the terminal, that is, end time. The LogOutInfo message of the terminal may use a format, as shown in FIG. 7. The message is sent through an interactive channel. The LogOutInfo message may be stored in an interactive server or a special server for recording statistics data.

The LogOutInfo message may be sent to the server in HTTP POST mode. Then, the server processes the LogOutInfo message and adds it to the database. The LogOutInfo message may also be sent in SMS mode. The HTTP POST mode is only an example, and may also be replaced with other carrier modes. However, the principle and idea are the same.

S415. After receiving the LogOutInfo message properly, the server returns a 200 OK message to the terminal.

The 200 OK message may be returned through an interactive channel or other modes. For example, the server may send the response to the terminal in peer-to-peer mode, or push the response to the terminal. In this embodiment, 200 OK indicates that the LogOutInfo message is sent to the server successfully. Other acknowledgement modes may also be available in different network environments, but the idea and principle are the same.

S416. After the terminal logs out of the program, the server stores the interactive information of the user, and makes statistics of user participation information in the interactive program.

The server stores the interactive information that the user sends during the playing of the interactive program, and makes statistics of the interactive information of the user after the program ends. Finally, the server may feed back the statistics result to the user. The statistics contents may be program participation details or an overall interactive result of the program. For example, after a selective interactive program ends, the interactive server may count the audience choosing A and the audience choosing B. This example is intended to describe the interactive update result and form more clearly.

S417. The server sends the final statistics result of the interactive program to the user.

The terminal user may obtain a participation result after participating in a program, where the participation result may include the participation results of the terminal user and the overall program. In this embodiment, dotted lines indicate transmission of the final result, which means that this step is optional.

The terminal gives feedback to an interactive program during the reception of program contents, and the server responds to the choice that the user makes, thus achieving interactive update. The message carrier mode and transmission mode used in this embodiment may be replaced with other carrier modes and transmission modes, but the principle and idea are the same.

In this embodiment, the LogOutInfo and LogInInfo messages may be stored in the server so that statistics of the program watching information of the terminal may be made. The data structures may be stored in a table similar to or same as Table 8. The table may be stored in the server or a database special for recording the statistics result.

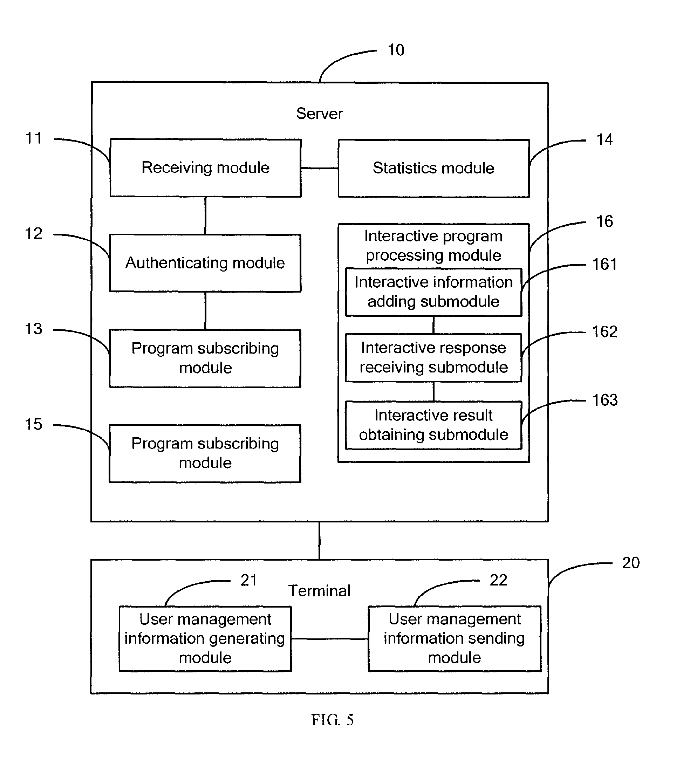

The fifth embodiment of the present invention provides a system for obtaining user management information in the mobile TV service. As shown in FIG. 5, the system includes:
a server 10, adapted to: provide a terminal 20 with optional programs included in an SG, send program contents selected by the terminal 20 to the terminal 20 after successful authentication, and store the user management information of the terminal 20; and
the terminal 20, adapted to send user management information to the server 10 in case of startup.

Specifically, the server 10 further includes:
a receiving module 11, adapted to receive the user management information sent from the terminal 20;
an authenticating module 12, adapted to authenticate the terminal 20 that requests to watch a program;
a program sending module 13, adapted to send program contents selected by the terminal 20 to the terminal 20 authenticated by the authenticating module;
a statistics module 14, adapted to obtain the user management information of the terminal 20 according to the contents stored in the receiving module 11;
a program subscribing module 15, adapted to: accept the terminal's subscription to or unsubscription from optional programs included in the SG and update the local program subscription information of the terminal 20 according to the subscription or unsubscription result; and
an interactive program processing module 16, adapted to implement interactions with the terminal 20 in an interactive program.
The interactive program processing module 16 further includes:
an interactive information adding submodule 161, adapted to add interactive information and/or interactive update information to the program sending module for transmission to the terminal 20;
an interactive response receiving submodule 162, adapted to receive an interactive information response that is returned by the terminal 20 according to the interactive information and/or interactive update information sent from the interactive information adding submodule 171; and
an interactive result obtaining submodule 163, adapted to: process the interactive information response received by the interactive response receiving submodule 172, and obtain the interaction participation result of the terminal 20.

The terminal 20 further includes:
a user management information generating module 21, adapted to generate user management information; and
a user management information sending module 22, adapted to send the generated user management information in the form of a message.

Through the description of the foregoing embodiments, it is understandable to those skilled in the art that the embodiments of the present invention may be implemented through software and a necessary general hardware platform or through hardware only. However, in most cases, software and a general hardware platform are preferred. Based on this understanding, the technical solution of the present invention or contribution to the prior art may be embodied by a software product. The software product is stored in a storage medium and includes multiple instructions that instruct a network device to execute methods provided in embodiments of the present invention.

Although the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for obtaining user management information, comprising:
receiving a message carrying user management information from a terminal;
obtaining the user management information of the terminal from the message; and
processing the user management information.

2. The method of claim 1, wherein the user management information comprises at least one kind of the following:
message type ID, message sending time, terminal ID, service ID, program ID, online or offline status of the terminal, terminal identification code, user ID information and channel ID, wherein the message type ID comprises a login message ID and a logout message ID.

3. The method of claim 1, wherein the process of processing the user management information comprises at least one of the following operations:
recording user login status information; recording status information of a program that the user watches; and recording service information that the user needs to update, wherein:
the user login status comprises at least of one kind of the following: terminal ID, user ID, service subscription relationship, login time, login mode, and user key validity period;
the status information of the program that the user watches comprises at least one of the following: ID of the program that the user watches, ID of a channel that the user watches, time when the user watches the channel, and time when the user logs out of the channel; and
the service information that the user needs to update comprises at least one of the following:
whether the user key needs to be updated, whether interactive information of the user needs to be updated, and whether a service guide (SG) of the user needs to be updated.

4. The method of claim 1, wherein the process of processing the user management information further comprises:
obtaining channel program watching time according to the message sending time carried in the user management information, or the time when a first frame and a last frame of a program sent by the terminal.

5. The method of claim 1, wherein the process of processing the user management information further comprises:
obtaining a viewing rate of a channel or program.

6. The method of claim 5, wherein the process of obtaining the viewing rate of the channel or program comprises:
setting an ID for the channel or program under statistics;
receiving a message that the terminal sends when receiving or logging out of contents of the channel or program; and
obtaining the viewing rate of the channel or program according to the message.

7. The method of claim 5, wherein the process of obtaining the viewing rate of the channel or program comprises:
sending a message about whether to watch a specified channel or program to all terminals or a specified terminal;
receiving a response from a terminal that is watching the specified channel or program;
obtaining the viewing rate of the channel or program according to the response.

8. The method of claim 1 or 2, wherein after obtaining the user management information of the terminal from the message, the method further comprises:
obtaining interactive program statistics information.

9. The method of claim 8, wherein the process of obtaining interactive program statistics information comprises:
after receiving the user management information of the terminal, sending an interactive program to the terminal, wherein the interactive program comprises at least one of interactive information and interactive update information;
receiving an interactive information response from the terminal; and
obtaining the interactive program statistics information according to the interactive information response.

10. The method of claim 1, wherein the process of receiving the message carrying user management information from the terminal comprises:
receiving the user management information from the terminal when the terminal is started or zaps a watched program or channel.

11. The method of claim 10, wherein after obtaining the user management information of the terminal from the message, the method further comprises:
authenticating the terminal according to an authentication request sent from the terminal when the terminal is started or zaps a watched program or channel.

12. The method of claim 1, wherein after obtaining the user management information of the terminal from the message, the method further comprises:
sending program contents selected by the terminal to the terminal; and
authenticating the terminal after determining that program content receiving time of the terminal exceeds a preset time.

13. The method of claim 1, wherein after obtaining the user management information of the terminal from the message, the method further comprises:
providing the terminal with optional programs comprised in a service guide (SG).

14. The method of claim 13, wherein after providing the terminal with optional programs comprised in the SG, the method further comprises:
accepting the terminal's subscription to or unsubscription from optional programs comprised in the SG; and
receiving updated program subscription information of the terminal in case of changes in programs subscribed to by the terminal.

15. A system for obtaining user management information, comprising:
a server, adapted to: receive user management information from a terminal, and store the obtained user management information of the terminal; and
the terminal, adapted to send the user management information to the server.

16. The system of claim 15, wherein the server further comprises:
a receiving module, adapted to receive the user management information sent from the terminal; and
a statistics module, adapted to store the user management information of the terminal obtained by the receiving module.

17. The system of claim 15, wherein the terminal further comprises:
a user management information sending module, adapted to send the user management information to the server.

18. A server, adapted to obtain user management information and comprising:
a receiving module, adapted to receive user management information sent from a terminal; and
a statistics module, adapted to store the user management information of the terminal obtained by the receiving module.

19. The server of claim 18, further comprising:
a program subscribing module, adapted to: accept the terminal's subscription or unsubscription from optional programs comprised in a service guide (SG), and update local program subscription information of the terminal according to a subscription or unsubscription result.

20. The server of claim 18, further comprising:
an authenticating module, adapted to authenticate a terminal that requests to watch a program.

21. The server of claim 18, further comprising:
an interactive program processing module, adapted to implement interactions with the terminal in an interactive program.

22. A terminal, adapted to send user management information to a server and comprising:
a user management information generating module, adapted to generate user management information; and
a user management information sending module, adapted to send the generated user management information in the form of a message.
